# EUROPEAN PATENT APPLICATION

(11) **EP 4 810 391 A1**
(43) Date of publication of application: **23.09.2026**
(21) Application number: 26165449.5
(22) Date of filing: 17.03.2026
(51) Int. Cl.: B65C 1/02, B65C 9/02, B65C 9/40

(54) **AUTOMATED APPARATUS AND SYSTEM FOR DOCUMENT PROCESSING AND/OR PACKAGE LABELLING**

(30) Priority: 17.03.2025 US 202563773263 P
(71) Applicant: PSI Peripheral Solutions Inc., Mississauga, Ontario L5L 5Z4 (CA)
(72) Inventor: HUGHES, Gary, Mississauga, L5L 5Z4 (CA); POLLOCK, John, Mississauga, L5L 5Z4 (CA); SHASTRI, Vaibhavkumar, Mississauga, L5L 5Z4 (CA)
(74) Representative: Mewburn Ellis LLP

(57) **Abstract**

An automated apparatus and system (100) for document processing and/or package labelling. The system comprises a base (102), a conveyor system (104), a scanner (120), a plurality of applicators (130), and a control system (140) contained in a housing mounted to the base. The control system communicates with an enterprise resource planning system server and is connected to the conveyor system, the sensors, and the applicators. The control system is configured to: receive from the scanner a package ID associated with a package on the conveyor system, determine from the ERP system server document and/or label specifications for the package in accordance with the package ID, and send control instructions to respective applicators in accordance with the determined document and/or label specifications. Each applicator is one of a print and apply label applicator, a document applicator or a document inserter, each configured to activate in response to receiving a respective control instruction from the control system.

## Description

### RELATED APPLICATION DATA

The present application claims priority to, and the benefit of, provisional U.S. patent application no. 63/773,263, filed March 17, 2025, which is incorporated herein by reference.

### TECHNICAL FIELD

The present disclosure relates generally to pack line automation, and more specifically to an automated apparatus and system for document processing and/or package labelling, related methods, and to a positioning device for a line scanner of the automated apparatus and system.

### BACKGROUND

Industries in which large volumes of articles need to be packaged and delivered quickly and accurately, such as ecommerce, retail, warehousing, logistics, and manufacturing, utilize automated order fulfillment processes. Pack line automation is the automation of systems, technologies, and workflows associated with packing articles for order fulfillment to streamline the order fulfillment process. Pack line automation involves the integration of machinery, conveyors, robotics and/or software to efficiently handle pack line tasks such as article sorting, packaging, labeling and quality control. Pack line automation reduces the need for manual labor, increases product throughput, minimizes errors and enhances overall operational efficiency. Pack line automation may also provide real-time tracking of articles and/or orders, inventory management optimization, and operational cost reductions. Artificial intelligence (Al) may also be integrated into pack line processes to provide more precise rightsizing of packages and other features.

Warehouse operations are dynamic and fast paced. The pack line process alone may comprise more than a dozen unique processing tasks that are susceptible to human error and prone to bottlenecks if manually performed. Automation of the pack line to capture the full range of processing tasks in the order fulfillment process can be challenging. The pack line process includes document insertion and/or application and package labeling to ensure that each package in an order is properly identified and accompanied by any required documentation. Document processing comprises printing or retrieving documents such as invoices, packing slips and return forms, and inserting the documents into the package or adhering the documents to the package. Package labeling comprises printing labels such as shipping labels, barcode labels and/or tracking information labels, and affixing the labels onto the package. Document processing and package labeling may also comprise document and/or label generation. The manual and semi-automated implementation of document handling and package labeling is typically slow and inefficient, error prone and costly, leading to operational bottlenecks and increased operational costs. Accordingly, there remains a need for improvements in pack line automation relating to document processing and package labeling that addresses one or more of the problems associated with manual and semi-automated implementations and/or other problems.

### SUMMARY

The present disclosure relates generally to pack line automation, and more specifically to an automated apparatus and system for document processing and/or package labelling, related methods, and to a positioning device for a line scanner of the automated apparatus and system. The apparatuses, systems and methods of the present disclosure may be integrated with those used to implement other processing tasks of an automated pack line. For example, the automated apparatus and system of the present disclosure comprise a conveying system that may receive packages from a conveying system from an upstream station of a pack line and may output packages to a downstream station of a pack line
The apparatuses, systems, and methods of the present disclosure seek to address one or more of the problems associated with manual or semi-automated document processing and/or package labelling in an automated pack line by providing a solution which reduces or eliminates inefficiencies and errors, thereby reducing the operational costs. The apparatuses, systems, and methods of the present disclosure also seek to provide one or more of advantages such as increased speed and throughput, a compact/small size, scalability, and interoperability with other pack line solutions so that the apparatuses, systems, and methods of the present disclosure can be integrated with other pack line stations and functions of a pack line with relative ease and in a relatively seamless manner.

The traditional approach to pack line automation is linear. It involves cataloguing tasks to be automated, identifying the necessary machinery to accomplish those tasks, and implementing the required technology along a conveyor in a logical sequence. For example, automated conveyors, labelers, weighers, sorters and other equipment may be integrated in a straightforward, linear manner. This methodology arose from the implementation of technologies developed by businesses with discrete proficiencies. The apparatuses, systems, and methods of the present disclosure are the result of a non-linear approach to technological design and implementation in pack line automation that deviates from the traditional linear approach by using first principles to optimize accuracy and efficiency in pack line automation solutions. Using a desired pack line automation outcome and defined pack line environment conditions, the pack line automation challenge is solved across the three dimensions that are important to the pack line environments: function, space, and time.

With respect to function, the present inventors have recognized that various interdependent processes and functions, while individually specialized, may work seamlessly together as part of a larger, integrated system. Functions such as sorting, packing, labeling, and document processing are not discrete or isolated steps but may instead be dynamically linked and coordinated to accurately and efficiently complete order fulfillment processes that would otherwise necessitate multiple machines or points of automation. With respect to space, an automation solution may additionally be designed with spatial compression as a priority, being configured to fit within a particular physical boundary, thereby minimizing floorspace while maintaining maximal efficacy. With respect to time, an automation solution designed to save time can greatly enhance productivity and reduce operational costs. Time is a valuable operational resource, and time may be saved at the task automation level and at management and service levels through software integration and commissioning.

In accordance with one aspect of the present disclosure, there is provided an automated system for document processing and/or package labelling. The system comprises a base, a conveyor system, a scanner, a plurality of applicators, and a control system contained in a housing mounted to the base. The control system communicates with an enterprise resource planning system server and is connected to the conveyor system, the sensors, and the applicators. The control system is configured to: receive from the scanner a package ID associated with a package on the conveyor system, determine from the ERP system server document and/or label specifications for the package in accordance with the package ID, and send control instructions to respective applicators in accordance with the determined document and/or label specifications. Each applicator is one of a print and apply label applicator, a document applicator or a document inserter, each configured to activate in response to receiving a respective control instruction from the control system.

In accordance with a first example embodiment of the first aspect, there is provided a system, comprising: an apparatus comprising: a base comprising a base frame; a conveyor system mounted to the base at a height above the base, the conveyor system having a conveying direction extending from a first end of the conveyor system to a second end of the conveyor system, the conveyor system comprising a transfer table at the first end thereof for receiving packages and one or more conveyors downstream of the transfer table in the conveying direction; a first scanner mounted to the conveyor system or base with a view of the transfer table; and a plurality of applicators mounted to the base, each applicator being (i) a print and apply label applicator configured to print a label and apply the label to a package on the conveyor system in response to receiving a respective control instruction, (ii) a document applicator configured to apply an adhesive portion of an adhesive-backed document enclosure containing one or more printed documents to a package on the conveyor system in response to receiving a respective control instruction, or (iii) a document inserter configured to insert one or more printed documents into an open package on the conveyor system in response to receiving a respective control instruction; and a control system contained in a housing mounted to the base, the control system comprising one or more processors, a memory and a communication interface for communication with an enterprise resource planning (ERP) system server over a communications network, the control system being connected to the conveyor system, the sensors, and the applicators, wherein the control system is configured to: receive from the first scanner a package identifier (ID) associated with a package on the conveyor system; determine from the ERP system server document and/or label specifications for the package in accordance with the package ID; and send control instructions to respective applicators in accordance with the determined document and/or label specifications.

In accordance with some or all examples of the first example embodiment, the automated system further comprising: one or more further scanners mounted to the conveyor system or base with a view of the conveyor system after the applicators, wherein a number and location of further scanners is dependent on a number and location of the label applicators;
In accordance with some or all examples of the first example embodiment, the applicators are spaced apart in the conveying direction.

In accordance with some or all examples of the first example embodiment, a subset of the applicators are located on a first side of the conveying system and another subset of the applicators are located on a second side of the conveying system opposite to the first side.

In accordance with some or all examples of the first example embodiment, the automated system further comprises: a printer coupled to the control system and configured to print one or more documents in response to receiving one or more respective control instructions from the control system, the one or more respective control instructions being sent by the control system to the printer in response to the determined document specifications; and a document retriever for retrieving one or more documents from the printer and transferring the one or more retrieved documents to the document inserter or a document inserter in response to receiving a respective control instruction from the control system, the document inserter being configured to fold the one or more retrieved documents received from the document retriever to produce one or more folded documents and insert the one or more folded documents into an adhesive-backed document enclosure, the document applicator being to configured to apply the adhesive portion of the adhesive-backed document enclosure to a package on the conveyor system in response to receiving a respective control instruction.

In accordance with some or all examples of the first example embodiment, the automated system further comprises: one or more document trays, each tray for storing pre-printed documents of a particular type; and a document retriever for retrieving one or more documents from the one or more document trays in accordance with the determined document specifications and transferring the one or more retrieved documents to the document inserter or a document inserter in response to receiving a respective control instruction from the control system, the document inserter being configured to fold the one or more retrieved documents received from the document retriever to produce one or more folded documents and insert the one or more folded documents into an adhesive-backed document enclosure, the document applicator being to configured to apply the adhesive portion of the adhesive-backed document enclosure to a package on the conveyor system in response to receiving a respective control instruction.

In accordance with some or all examples of the first example embodiment, the document enclosure is an envelope, pouch or bag.

In accordance with some or all examples of the first example embodiment, the automated system further comprises lockable wheels mounted to the base.

In accordance with some or all examples of the first example embodiment, the automated system further comprises leveling pads mounted to the base.

In accordance with some or all examples of the first example embodiment, the automated system further comprises an enclosure for environmental protection surrounding the apparatus and the control system, the enclosure including a door coupled to the control system, the door movable between an open position and a closed position, the control system being configured to move the door from the closed position to the open position in response to receiving a respective control instruction from the control system to allow the applicators to interact with a package in the conveying system, and to move the door from the open position to the closed position in response to receiving a respective control instruction after the applicators have completed interacting with the package in the conveying system.

In accordance with some or all examples of the first example embodiment, the automated system further comprises: a positive pressure filtered air system within the enclosure and an environment control system connected to the positive pressure filtered air system for controlling the positive pressure filtered air system to provide a positive pressure environment within the enclosure.

In accordance with some or all examples of the first example embodiment, the first scanner scan packages to read the package ID, and wherein the one or more further scanners scan packages after a last conveyor in the conveying system to read data from applied labels and/or applied documents.

In accordance with some or all examples of the first example embodiment, the automated system further comprises: a further transfer table at the second end of the conveying system downstream of the conveyors for diverting rejected packages in response to a determination that data from applied labels and/or applied documents does match the determined document and/or label specifications for the package ID.

In accordance with some or all examples of the first example embodiment, wherein rejected packages are diverted to a station for retrieval and/or repair.

In accordance with another aspect of the present disclosure, there is provided an apparatus for an automated system for document processing and/or package labelling as described above and herein.

In accordance with a further aspect of the present disclosure, there is provided a method for automated document processing and package labelling for use by a control system.

In accordance with a further aspect of the present disclosure, there is provided a computing system comprising one or more processors coupled to one or more memories. The one or more memories have tangibly stored thereon executable instructions for execution by the one or more processors. The executable instructions, in response to execution by the one or more processors, cause the computing system to perform the methods described above and herein.

In accordance with yet a further aspect of the present disclosure, there is provided one or more non-transitory machine-readable media having tangibly stored thereon executable instructions for execution by one or more processors of a computing system. The executable instructions, in response to execution by the one or more processors, cause the computing system to perform the methods described above and herein.

In accordance with yet a further aspect of the present disclosure, there is provided a positioning device for a scanner.

Other aspects and features of the present disclosure will become apparent to a person of ordinary skill in the art upon review of the following description of specific implementations of the application in conjunction with the accompanying figures.

### BRIEF DESCRIPTION OF THE DRAWINGS

Reference will now be made, by way of example, to the accompanying drawings which show example embodiments, and in which:
FIG. 1 is a front perspective view of an automated system for package labelling in accordance with one example embodiment of the present disclosure.
FIG. 2 is a rear perspective view of the automated system of FIG. 1.
FIG. 3 is a plan view of the automated system of FIG. 1.
FIG. 4 is a front perspective view of an automated system for package labelling in accordance with another example embodiment of the present disclosure.
FIG. 5 is a rear perspective view of the automated system of FIG. 4.
FIG. 6 is a plan view of the automated system of FIG. 4.
FIG. 7 is a rear perspective view of an automated system for document processing in accordance with one example embodiment of the present disclosure.
FIG. 8 is a front perspective view of the automated system of FIG. 7.
FIG. 9 is an alternate front perspective view of the automated system of FIG. 7.
FIG. 10 is a front perspective view of an automated system for package labelling in accordance with a further example embodiment of the present disclosure.
FIG. 11 is a rear perspective view of the automated system of FIG. 10.
FIG. 12 is a front view of the automated system of FIG. 10.
FIG. 13 is a plan view of the automated system of FIG. 10.
FIG. 14 is a front perspective view of an enclosed automated system in accordance with an example embodiment of the present disclosure.
FIG. 15 is a front perspective view of an enclosed automated system in accordance with an FIG. 16 is a simplified block diagram of an example of a computing system suitable for use in controlling an automated system of the present disclosure.
FIG. 17 is a simplified block diagram of a communication system suitable for use with an automated system of the present disclosure.
FIGs. 18 to 21 are perspective views of a positioning device and line scanner of an automated apparatus and system in accordance with the present disclosure.
FIGs. 22 to 23 are perspective views of the positioning device of FIGs. 18 to 21 for use with a line scanner of an automated apparatus and system in accordance with the present disclosure.
FIG. 24 shows a Z-L pattern logical flowchart in accordance with one embodiment of the present disclosure.

### DETAILED DESCRIPTION OF EXAMPLE EMBODIMENTS

Example embodiments of the present disclosure are shown in the accompanying drawings and described in detail below. Specific terminology is employed for clarity. A person skilled in the relevant art will recognize that equivalents can be employed in some instances without departing from the scope of the present disclosure. Accordingly, the description and drawings are intended to be illustrative rather than restrictive unless otherwise indicated. All technical and scientific terms used in the present disclosure have the same meaning as commonly understood by a person of ordinary skill in the art to which the present disclosure belongs unless defined otherwise. The same reference numbers are used to refer to the same elements wherever possible. Elements referred to in the singular may be plural and vice versa, except where indicated otherwise either explicitly or by context. The terms "memory", "computer-readable medium" and "machine-readable medium" have the same or similar meaning and may be used interchangeably.

Within the present disclosure, the term "document" refers to any printed material that is to be included with a package including an invoice, packing slip, product information sheet, return form, declaration, order confirmation, receipt or the like. Within the present disclosure, the term "label" refers to any printed identification or information tag to be affixed to a package. The label includes information that may include package identifier, a customer number or other control number, customer name, shipping address, warning, notice or the like, or a combination thereof. The label may include machine-readable identifiers such as a barcode, QR code, data matrix, identification cods, tracking code, universal product code (UPC) or the like, or a combination thereof. The label may include a radio frequency identification (RFID) tag.

The automated system, apparatus and method of the present disclosure can be configured to accommodate packages (e.g., cartons or boxes) of all sizes. The system and apparatus can be used on a pack line for processing packages of infinitely variable sizes, variable document processing (variable document insertion with size and content of documents being variable) into the packages and/or application to the exterior of the packages (variable document application), variable label printing and application (size and content of labels being variable) to the exterior of the packages, or a combination thereof. The identifying label with a printed package ID or possibly electronic ID is scanned by the system which retrieves the document and label specifications associated with the package and determines and performs the corresponding processing steps according to the document and label specifications.

The system and apparatus has multiple print heads and applicator heads, which may be of the same or different type, providing single or multi-sided label application and allowing many different configurations and enabling a single system to perform tasks that would otherwise require multiple machines at different stations, often from different manufactures, requiring the manual transfer of packages between discreet processing stations in a pack line. The versatility of the automated system, apparatus and method of the present disclosure allows precise label application across diverse packaging requirements, enhancing operational flexibility and efficiency by reducing errors and increasing throughput with a fast return on investment, generally within 12-24 months. The automated system, apparatus and method of the present disclosure further streamline the pack line process by handling printing, folding, insertion of documents and/or application of documents in a single station, enhancing packing station throughput and precision. The automated system, apparatus and method of the present disclosure can be used to combine labeling, document insertion into an open package or a document enclosure such as an envelope, pouch or bag to be applied to the package, direct labeling/printing on the package, weighing and dimensioning into a single integrated system in a compact form factor.

The system of the present disclosure is an integrated modular system comprising a single integrated conveying system and multiple applicators, each applicator providing discrete document processing or labelling operations that is factory completed, calibrated and tested, and shipped to the installation site (i.e., the pack line environment) with onsite control or mechanical assembly, calibration, testing or engineering, thereby reducing onsite install commissioning and production interruption from weeks to 72 hours or less, or even 48 hours or so. The system arrives at the pack line environment on a shipping platform, ready to place and run in-line with an exiting pack line conveying system with settings and connections that were previously set and tested, providing a system that is "pre-commissioned" with "plug & play" type functionality.

A user friendly interface tool is provided to design a configure the system for a particular use case. The user interface tool allows users to configure the processes of the system and to understand the possible arrangements. The user interface tool also allows the configuration of package sizes, document and label specifications for a pack line environment that will determine the configuration of the apparatus and system. This significantly reduces the time to design specific configuration of the apparatus and system.

The automated system of the present disclosure allows for the on-demand printing and application of accurate and properly laced labels, reducing material waste and further reducing operational costs. As the industry moves more to the integration of Al into pack line automation to enable precise rightsizing of packages, the automated system of the present disclosure can be used to complement these advancements with its automated document processing and package labeling, providing a synergy between Al-driven pack line automation and optimization and the automated document processing and package labeling of the present disclosures that enhances overall efficiency, promotes sustainability, and contributes to significant cost savings.

For more complex applications, individual apparatus of the of the present disclosures can be linked together within a single automated system have a single control system (also referred to as a local control unit or programmable logic controller (PLC)). The use of a single control system can free up network bandwidth between the control system and an enterprise resource planning (ERP) system by reducing data traffic and latency. The automated system of the present disclosure has a base configured to accommodate all permutations of applicators and required service connections, power, connectivity (IO, IT) compressed air, and environmental control filtration.

The automated system also incorporates an order verification system which monitors the order fulfillment process in real-time with multiple verification checks, capturing images at critical stages to ensure accuracy and/or reroute package to lanes to repair incorrect packages before orders are shipped. The order verification system identifies inaccuracies, reduces return rates, and enhances customer satisfaction by providing documented proof of order accuracy. Additionally, automated system control software ensures precise communication between warehouse management systems (WMS) and automated equipment, minimizing errors and ensuring timely deliveries. The applicator controls are controlled by a control system, such as a PLC, housed in the apparatus which reduces latency in decision making and communication between applicators.

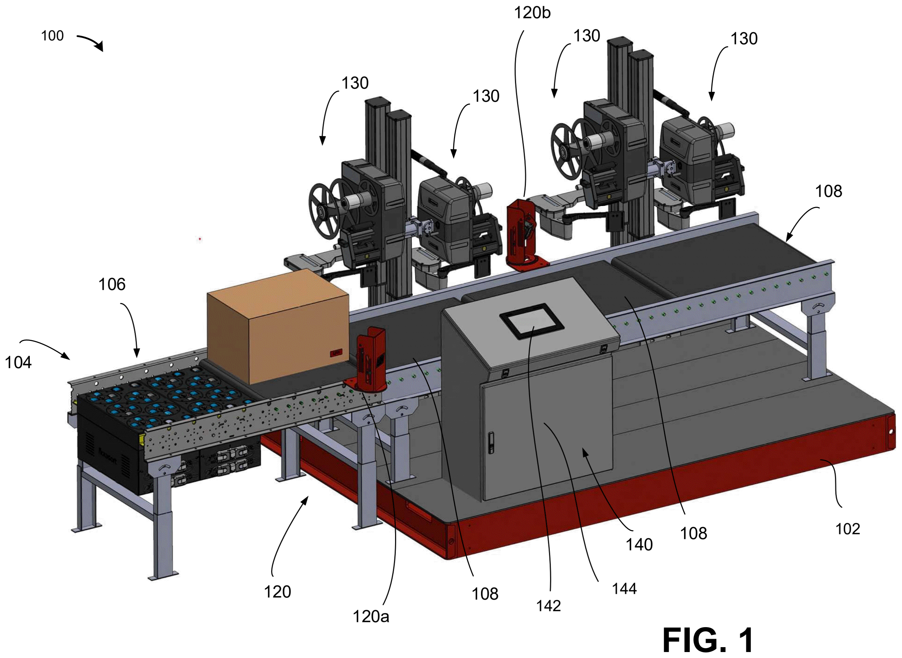

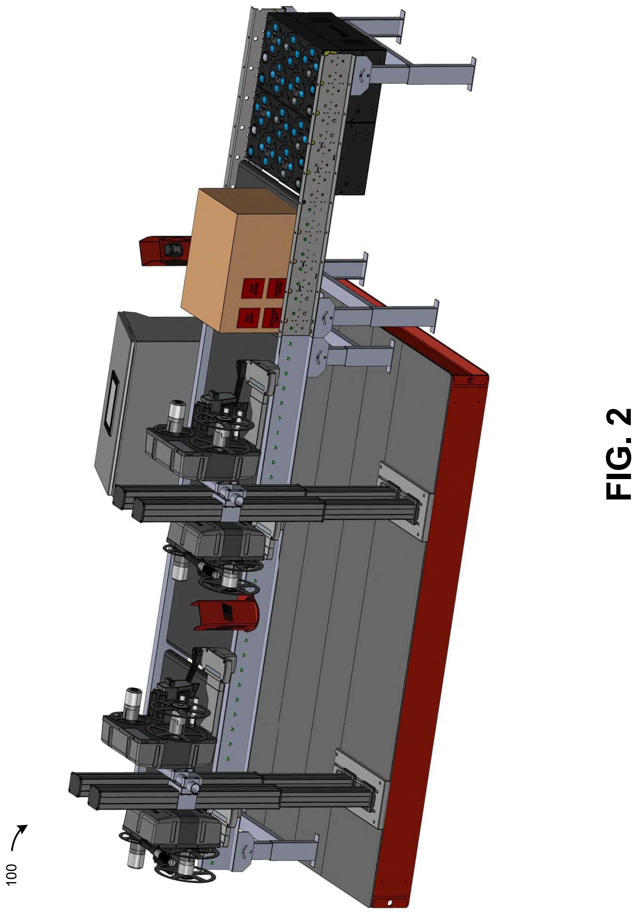

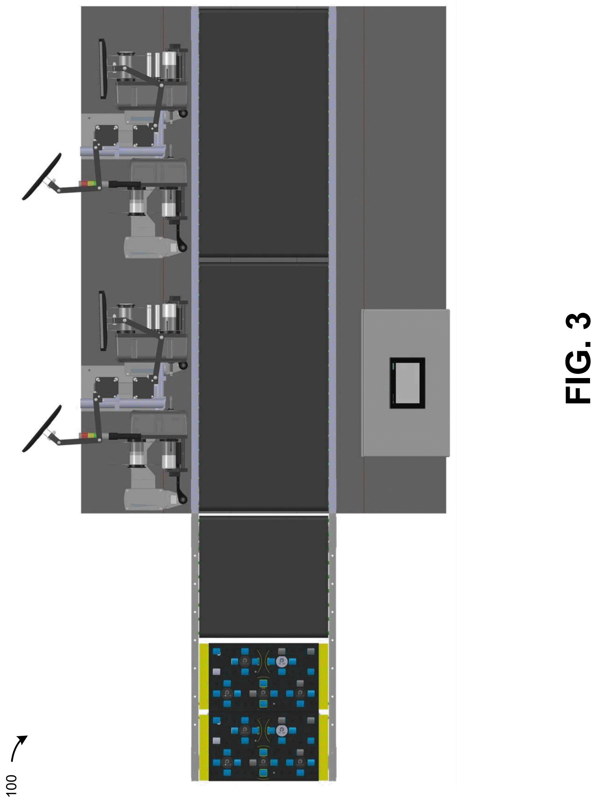

Referring now to FIGs. 1 to 3, an automated system 100 for package labelling in accordance with one example embodiment of the present disclosure will be described. The automated system 100 comprises a base 102 comprising a base frame and a conveying system 104 for conveying or transferring packages. The term "package" refers to any prepared unit that contains one or more articles to be shipped, delivered, or distributed, and may include cartons boxes, bags, pouches, envelopes, crates, pallets, blister packs, shrink-wrapped packages, cans, tins, totes, bins, some other unit, or any combination thereof. The term "article" refers to a product, part, good, ware, merchandise or the like. In a typical embodiment, the packages are cartons or boxes. The conveying system 104 is mounted to the base 102. The conveying system 104 is positioned at a height above the base frame. In the shown embodiment, the conveyor system comprises a horizontal frame that is supported by support posts or legs mounted to the base 104.

The conveying system 104 has a conveying direction extending from a first end of the conveyor system 104 to a second end of the conveyor system 104. The conveyor system 104 comprises a transfer table (transfer unit conveyor) 106 at the first end thereof and one or more conveyor units 108 downstream of the transfer table 106 in the conveying direction. In the embodiment of FIGs. 1-3, the conveying direction is left to right such that packages are received at transfer table 106 on the left side of the system 100 and are processed towards the right side of the system. The system 100 is defined by a number of controlled zones in at least some embodiments, wherein each zone may be defined by a respective conveyor.

The transfer table 106 provides flexible redirection/reorientation and rotation of packages received from upstream stations or operations in the pack line or other, and transfer to downstream conveyors 108. The transfer table 106 enables smooth movement of packages between conveyors at intersections. In the shown, embodiment the transfer table is a ball transfer table comprising an array of ball transfer units, each having a ball mounted on rotatable internal bearings that allowing packages to move smoothly in any direction with very little friction. In other embodiments, a different type of transfer table could be used.

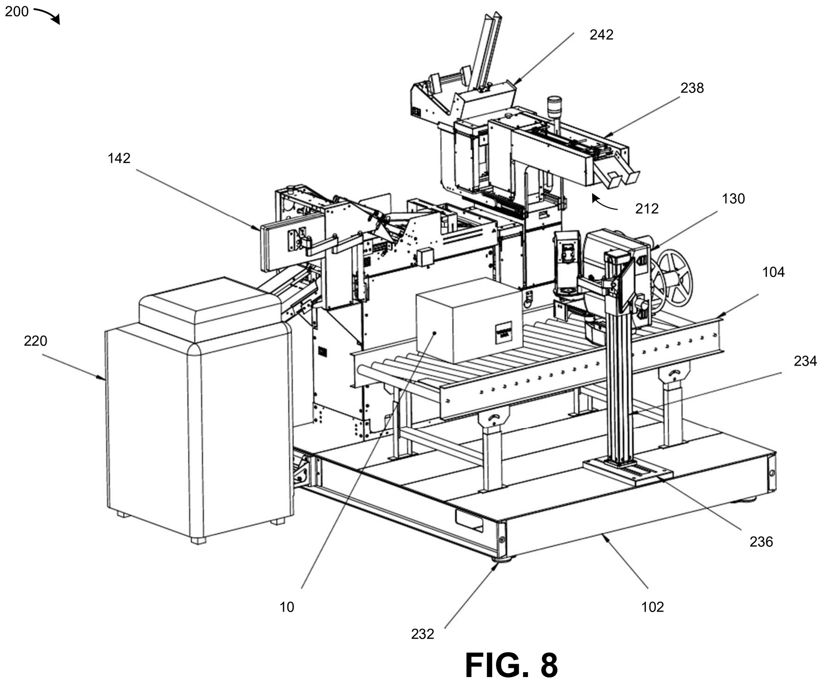

The system 100 also comprises lockable wheels (not shown) and levelling pads (or feet) 232 (FIG. 8) mounted to the bottom of the base 102, typically I underneath the base 102. The wheels can be used to move the system 100 after it has been delivered to the installation site at which it is to be used. The levelling pads can be used to level the system 100 once in its final location. The lockable wheels and levelling pads are typically provided in or near the corners of the base 102,

The conveyors 108 may comprise one or a combination of belt conveyors and roller conveyors. Belt conveyors are used to hold packages in position when side apply motion is applied to the packages, such as when a label is applied to the package. Roller conveyors may be used to direct a package against a guide rail to assist in positioning. The type, number, configuration and arrangement of the conveyor 108 vary depending on the application requirements.

The system 100 also comprises a number of sensors 120 mounted to the conveyor system 104 or base to scan packages received on the transfer table 104 and optionally sense package size/length and position of the packages, a plurality of applicators 130 that are mounted to the base 102, and a control system 140 contained in a housing 150 mounted to the base 102. The sensors 120 may comprise sensors configured to determine measure or sense characteristics of each package, such as weight and dimensions. The transfer table 104 may contain some of the sensors 120 such as a weight sensor. The sensors 120 comprise a scanner 120a mounted to the conveyor system 104 or base 102 with a view of the transfer table 106. The scanner 120a scans an identifying label on each package and determines a package identifier (ID), such as the LPN, associated with the respective package from the scanned image. The package ID is sent by the scanner 120a to the control system 140. An example of a suitable scanner for the scanner 120a is the SR-2000 line scanner from Keyence Corporation of America. The scanner 120a detects the arrival of packages in the transfer table 104 and thereby triggers or commences document processing and/or package labeling processes.

Each applicator 130 is one of (i) a print and apply label applicator (also known as a print and apply labeller) configured to print a label and apply the label to a package on the conveyor system in response to receiving a respective control instruction, (ii) a document applicator configured to apply an adhesive portion of an adhesive-backed document enclosure (such as an envelope, pouch or bag to be applied to the package) containing one or more printed documents to a package on the conveyor system in response to receiving a respective control instruction, or (iii) a document inserter configured to insert one or more printed documents into an open package on the conveyor system in response to receiving a respective control instruction. Typically, a system 100 has only one document applicator and/or one document inserter but may have several print and apply label applicators. In the shown embodiment, the applicators 130 are all print and apply labellers, which may be the same or different. Each print and apply labeller is configured to print a particular type of label and apply it to a package. For print and apply applicator 130, the label to be printed is dynamically determined based on the document specifications, and may include updated data, ensuring customized and up-to-date labels. Some elements of a label to be printed and applied may be predetermined and pre-printed. Example print and apply label applicators that may be used include the PA7100 Print and Apply Labeler from Diagraph Marking & Coding ("Diagraph"), owned by Illinois Tool Works Inc. (USA) or the D43 QuickTamp and D43 eTamp from Evolabel AB (Sweden). Clockwise and counterclockwise models (with clockwise and counterclockwise referring to a direction in which a spool for the label sheets rotates) and vertical and horizontal models (with horizontal / side labels sometimes referred to as 90's such as the Wipe90 or D43 Wipe90 from Evolabel AB) may be available, depending on the manufacturer. The vertical and horizontal models may each have clockwise or counterclockwise models depending on the manufacturer.

When the packages being processed are cartons or boxes, labels can be applied to any one or more of the four sides and/or the top of the carton or box. The label location on each side is selectable, such as leading edge, trailing edge. In some embodiments, up to ten (10) applicators such as print and apply applicators may be provided allowing up to 10 labels to be printed and applied to a carton or box. In some embodiments, the system and apparatus are configured to handle cartons or boxes ranging in size from 8 x 8 x 6 inches to 24 x 24 x 17 inches; however, the automated system and apparatus of the present disclosure may be adapted to accommodate packages of all sizes. In some embodiments, the apparatus and system have a 4 second cycle time per package, producing 900 package per hour or 7,200 packages every 8 hours.

The system 100 may further comprise one or more further scanners mounted to the conveyor system 104 or base 102 with a view of the conveyor system 102 after the applicators 130. The number and location of further scanners is dependent on a number and location of the label applicators. In the shown embodiment, a further scanner 120b may detect packages before and/or after each applicator 130 as to continue the document processing and/or package labeling process and assess whether documents and/or labels were properly labeled.

The applicators 130 are highly versatile and adjustable to a large number of positions and configurations. Each applicator 130 may include a number of print heads and/or applicator heads, which may be the same or different. This allows the system to perform tasks that would conventionally require multiple machines. For instance, an applicator 130 may comprise a means to raise, lower, rotate, translate, shift, turn, and/or otherwise adjust a print head and/or applicator head to achieve precise placement of labels or insertion of documents. In some example embodiments, the speed of application may also be adjusted. This versatility ensures precise label application across diverse application requirements. The number, configuration and arrangement of the applicators 130 allow for single-sided or multi-sided label application. The applicators 130 may apply documents and/or labels on exterior or interior surfaces of a package in some embodiments. The applicators 130 may mounted apply labels horizontally on a side of a package or vertically on the top of the package. In some embodiments, up to ten (10) applicators such as print and apply applicators may be provided allowing up to 10 labels to be printed and applied to a carton or box.

The applicators 130 are spaced apart in the conveying direction. In some embodiments, a subset of the applicators 130 may be located on a first side of the conveying system 104 and another subset of the applicators 130 are located on a second side of the conveying system 104 opposite to the first side. In other embodiments, the applicators 130 may be located on the same side of the conveying system 104.

Each print and apply label applicator is mounted to the base 102 using a vertical support post 234 (FIG. 8) mounted to the base 102 with the print and apply label applicator 130 clamped to the vertical support post 234 via a mounting clamps. The vertical support post 234 may be telescoping, thereby allowing the height of the applicator 130 to be raised or lowered. In embodiments in which the vertical support post 234 is telescoping, the vertical support post 234 may be motorized by a motor which raises or lowers the applicator 130. The vertical support post 234 is mounted to the base 102 within a mounting frame 234 (FIG. 8) that can be adjusted in a direction perpendicular to the conveyor direction and parallel with mounting clamps. This allows a standard base frame to be easily configured to an application and allows multiple bases/apparatus to be attached at the base 102 for longer and/or more complex applications.

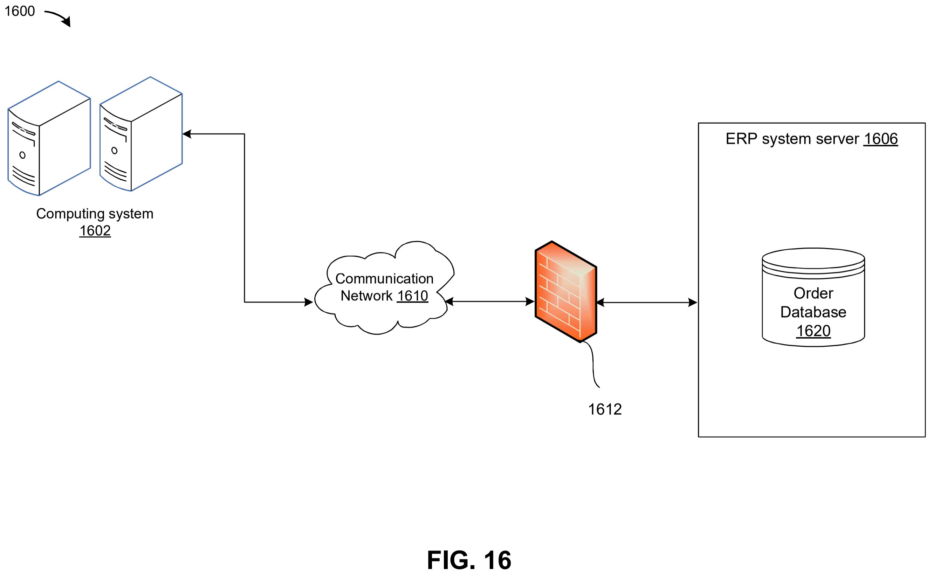

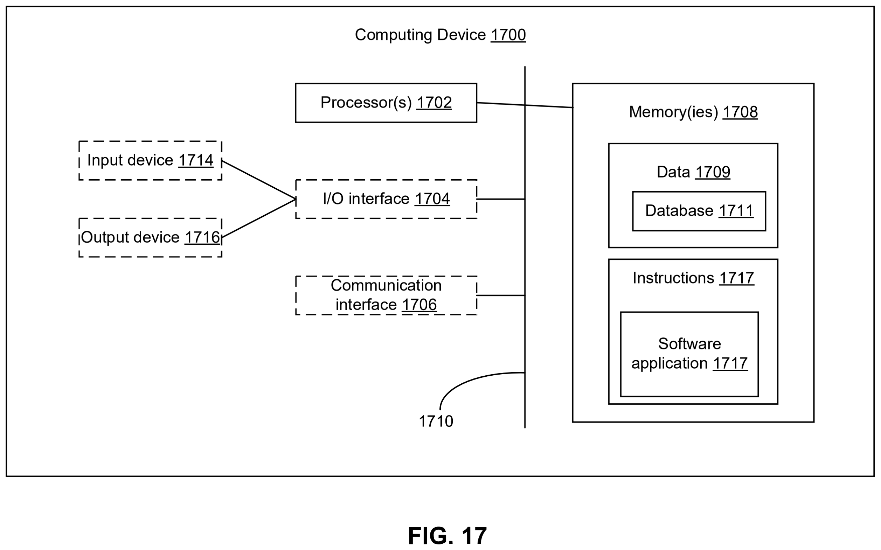

The control system 140 comprises a computing system such as the computing system 1700 (FIG. 17). In some examples, the control system is a programmable logic controller (PLC). The control system 140 provides a SCADA (Supervisory Control and Data Acquisition) industrial control system for controlling the system 100. The control system 140 comprises a communication interface 1706 for communication with an enterprise resource planning (ERP) system server 1604 (FIG. 16) of an entity for which the system 100 is deployed over a communications network 1610. The control system 140 is connected to the conveyor system 104, the sensors 120, the applicators 130, a printer 150 (if any), and a document retriever 160 (if any).

The control system 140 also comprises a human-machine Interface (HMI) that provides a visual user interface 142 that allows operators to view data, trends, and alarms, and issue commands. The control system 140 may further comprise other input/output devices such as buttons, switches and indicator lights provide visual feedback on the operational status of individual applicators 130 or other components of the system 100.

The control system 140 is contained in a housing 144 such as a control box mounted to the base 102. The apparatus comprises a power system located in the housing 144. The base 102 is configured to allow any type of applicators to be mounted thereto and to carry within it all required service connections, power, connectivity (IO, IT) compressed air, and environmental control filtration. The power system comprises means for powering one or more portions of the system. The power system may include a power circuit for distributing electrical power to system components. The power system may include a connector and/or connection for connecting to another power system.

The control system 140 is configured to receive from the first scanner a package identifier (ID) associated with a package on the conveyor system, determine from the ERP system server document and/or label specifications for the package in accordance with the package ID, and send control instructions to respective applicators in accordance with the determined document and/or label specifications.

In some other embodiments, the system may further comprise a printer and a document retriever for retrieving one or more documents from the printer 220 and transferring the one or more retrieved documents. The printer 220 is coupled to the control system 140 and configured to print one or more documents in response to receiving one or more respective control instructions from the control system 140, wherein the one or more respective control instructions are sent by the control system 140 to the printer 220 in response to the determined document specifications. The document to be printed is dynamically determined based on the document specifications, and may include updated data, ensuring customized and up-to-date documents. Some elements of a document to be printed and applied may be predetermined and pre-printed.

The document retriever is configured to retrieve one or more documents from the printer 220 and transferring the one or more retrieved documents to the document inserter or a document inserter in response to receiving a respective control instruction from the control system 140. The document inserter is configured to fold the one or more retrieved documents received from the document retriever to produce one or more folded documents and insert the one or more folded documents into an adhesive-backed document enclosure. The document applicator is configured to apply the adhesive portion of the adhesive-backed document enclosure to a package on the conveyor system in response to receiving a respective control instruction.

In some other embodiments, the system may further comprise one or more document trays, each tray for storing pre-printed documents of a particular type, and a document retriever for retrieving one or more documents from the one or more document trays in accordance with the determined document specifications and transferring the one or more retrieved documents as described above. The document trays may be part of a storage rack.

In some other embodiments, the system may further comprise a carton or box closing mechanism for closing open packages, which may include one or more robotic arms.

In some other embodiments, one or more of the applicators 130 be a print head configured for *direct labeling*/*printing on the package.*

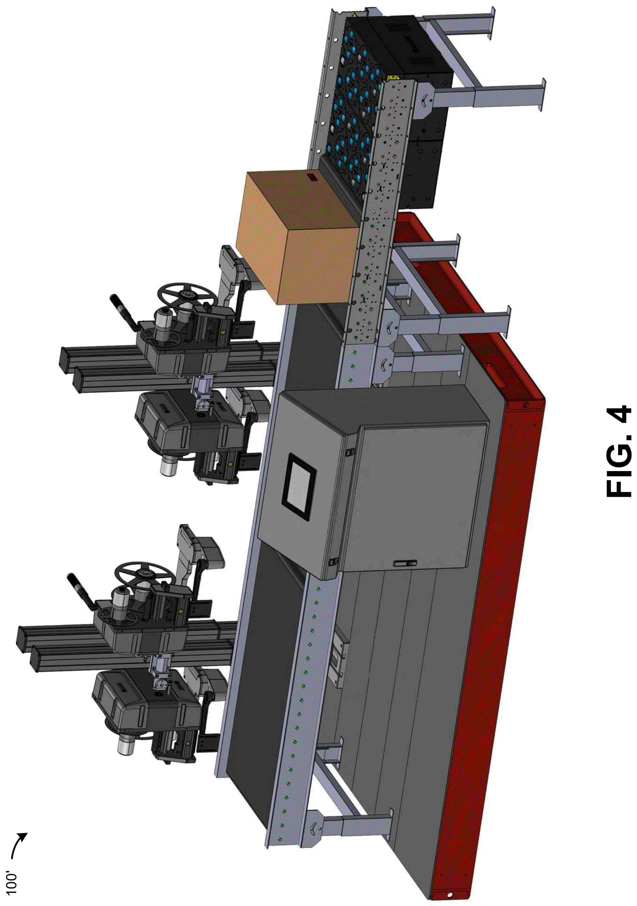

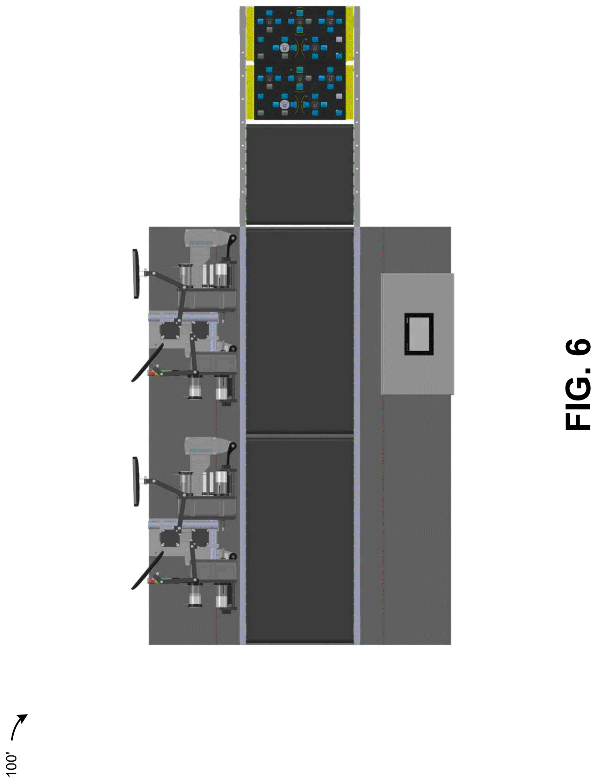

Referring now to FIGs. 4 to 6, an automated system 100' for package labelling in accordance with another example embodiment of the present disclosure will be described. The system 100' is similar to the system 100 except that the conveying direction is from right to left so that packages are received at transfer table on the right of the system 100' and processed towards the left.

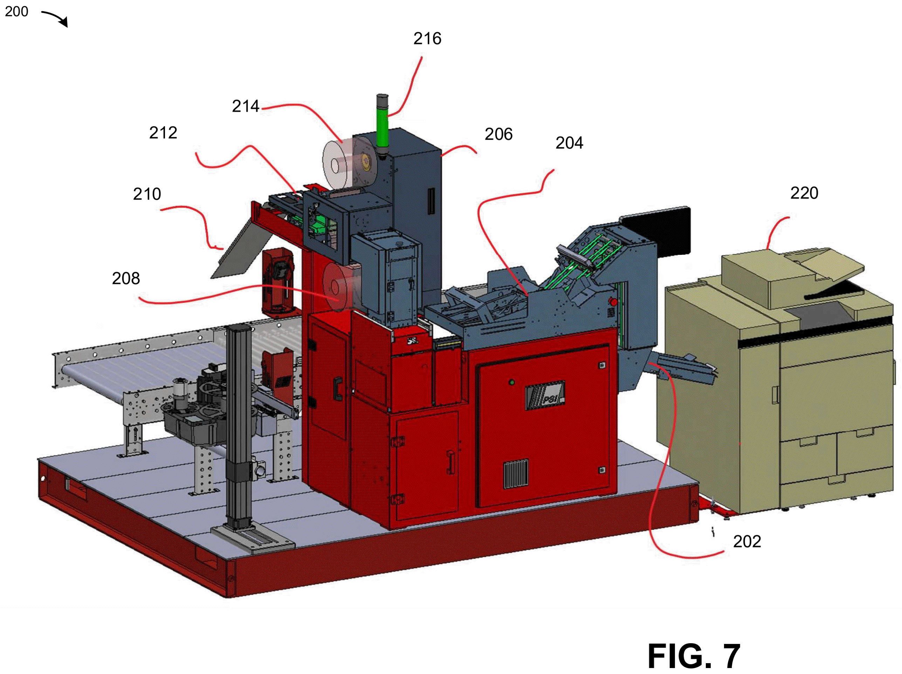

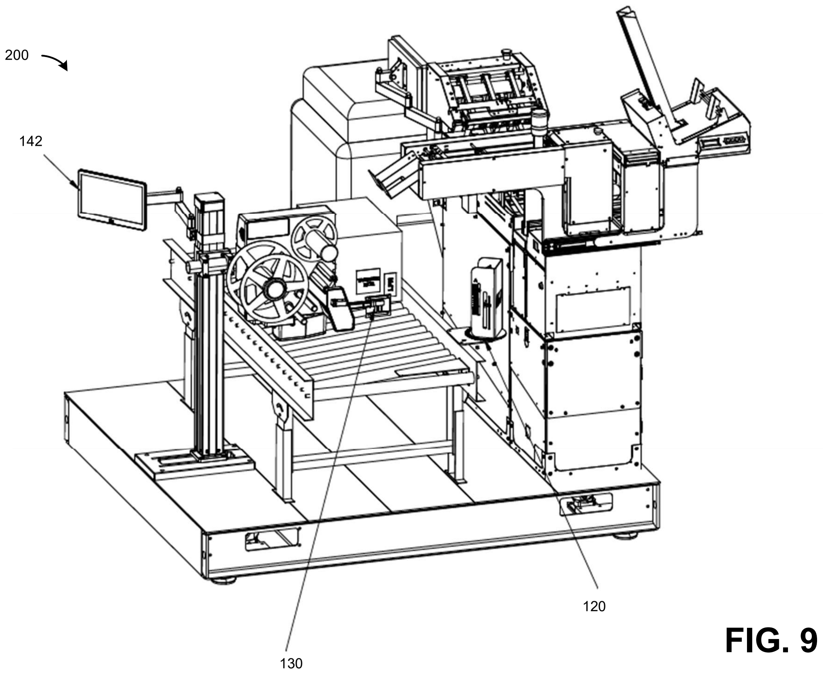

Referring now to FIGs. 7 to 9, an automated system 200 for document processing in accordance with one example embodiment of the present disclosure will be described. The system 200 comprises a printer 200 and a document retriever 202 for retrieving one or more documents from the printer 220 and transferring the one or more retrieved documents. The printer 220 is coupled to the control system 140 and configured to print one or more documents in response to receiving one or more respective control instructions from the control system 140, wherein the one or more respective control instructions are sent by the control system 140 to the printer 220 in response to the determined document specifications. The document to be printed is dynamically determined based on the document specifications, and may include updated data, ensuring customized and up-to-date documents. Some elements of a document to be printed and applied may be predetermined and pre-printed.

The document retriever is configured to retrieve one or more documents from the printer 220 and transferring the one or more retrieved documents to the document inserter or a document inserter in response to receiving a respective control instruction from the control system 140. The document inserter is configured to fold the one or more retrieved documents received from the document retriever to produce one or more folded documents and insert the one or more folded documents into an adhesive-backed document enclosure or to form the document enclosure around the document(s). In the shown embodiment, the system 200 comprises a film dispensing unit 206 in which a top and bottom film is formed and cut around each folded document/document package. The document applicator is configured to apply the adhesive portion of the adhesive-backed document enclosure to a package on the conveyor system in response to receiving a respective control instruction.

In some embodiments, the system may further comprise one or more document trays, each tray for storing pre-printed documents of a particular type, and a document retriever for retrieving one or more documents from the one or more document trays in accordance with the determined document specifications and transferring the one or more retrieved documents as described above. The document trays may be part of a storage rack.

The system 200 also comprises a page accumulator 204 to buffer multiple package jobs to maximize throughput. In at least some embodiments, each document page has a QR code added to the print file that is scanned to verify each page is printed.

The system 200 also comprises a film roll 208 on a film reel that is preprinted with marking for the dispensing unit to signal the cut length. The system 200 also comprises a rejection chute 210 for use if the package scan identification does not match the document package, in which case it is rejected and the package is conveyed to a repair lane downstream. The system 200 also comprises a document applicator 212 which applies an adhesive-backed document enclosure adhesive-side down on the package. An arm of the document applicator 212 automatically adjusts to varying package heights. The system 200 also comprises a top film dispensing roll 214 and indicator light 216, such as multicolor light, to indicate operational status or need for attention. The system 200 also comprise a print feeder 238 and a document enclosure feeder 242.

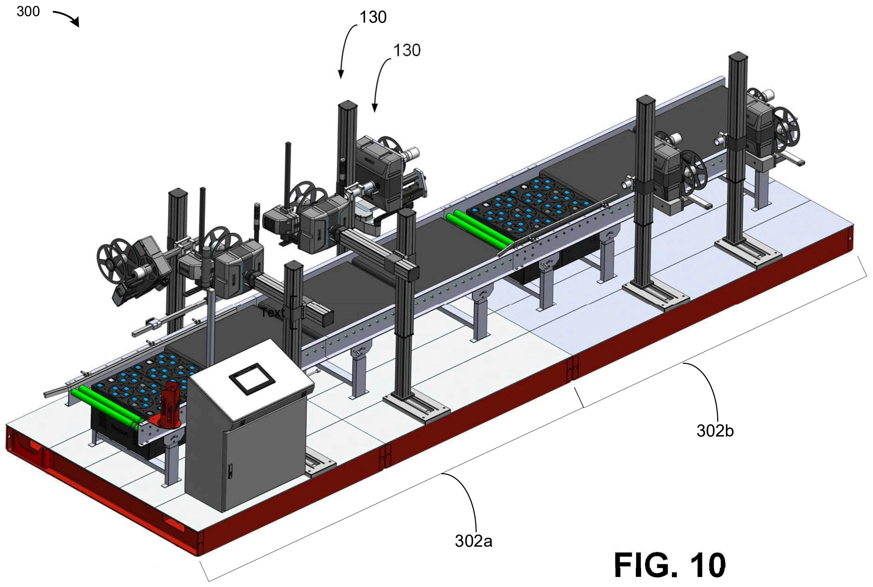

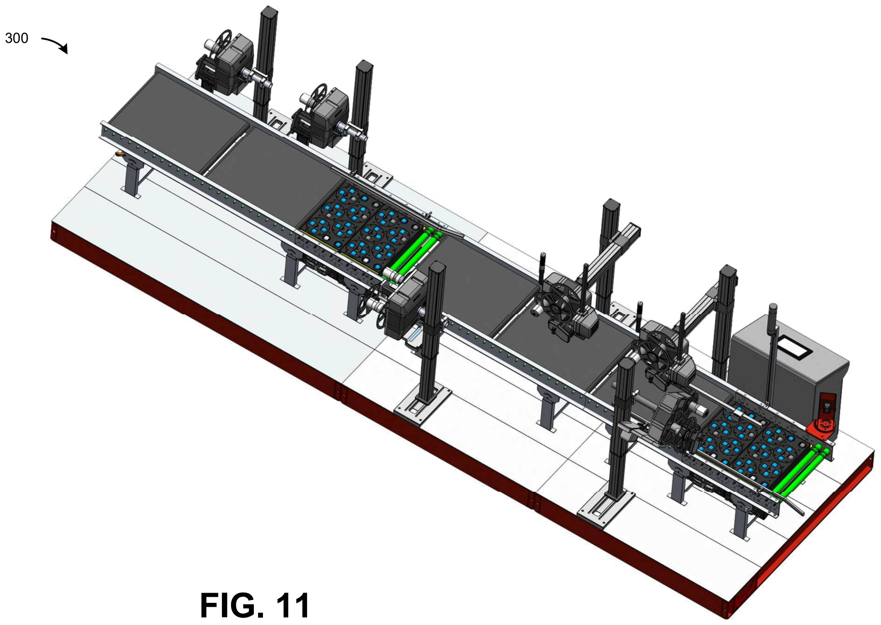

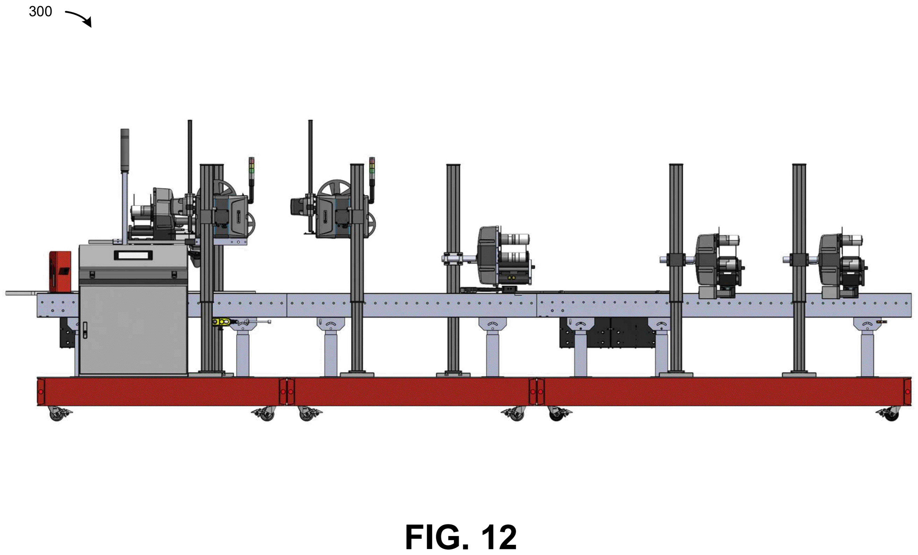

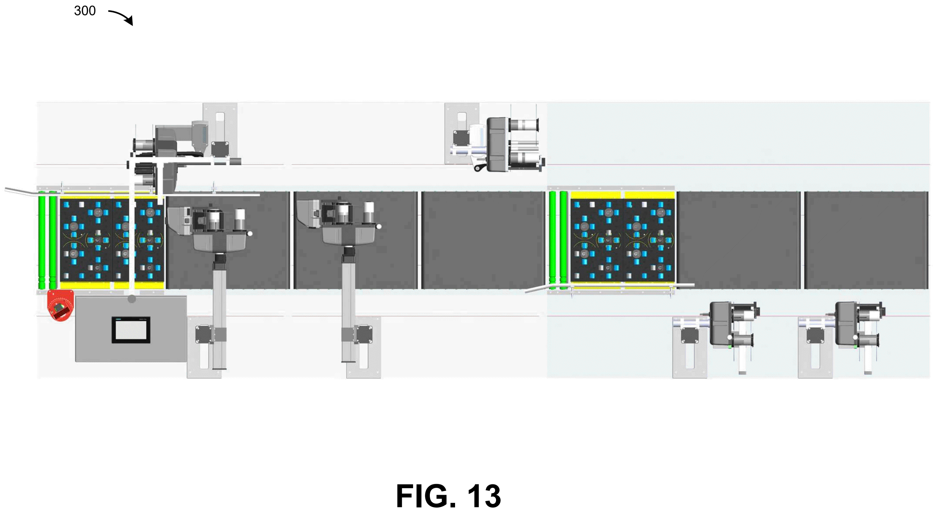

FIG. 10 to 13 illustrate an automated system 300 in accordance with an embodiment of the present disclosure comprised of two automated apparatus modules ("modular units") 302a and 302b connected to each other at the base 102 in an end-to-end fashion. However, unlike two independent automated apparatuses, the system 300 has only one control system 140. The connection of two or more modular units allows longer and more complex applications. Each of the modular units 302a, 302b has a base upon which components are mounted as described above in connection with the systems 100, 100' and 200. Each modular unit is a discrete functional unit that is fully pre-assembled and arrive at an installation site with all component settings and connections calibrated and tested in a factory test, thereby eliminating on-site assembly or calibration, leaving only minimal installation and setup. The modular design tends to allow easier customization of larger and more complex applications, providing improved scalability. The modular design also helps to reduce installation time, minimize setup complexity, and ensure quality deployment.

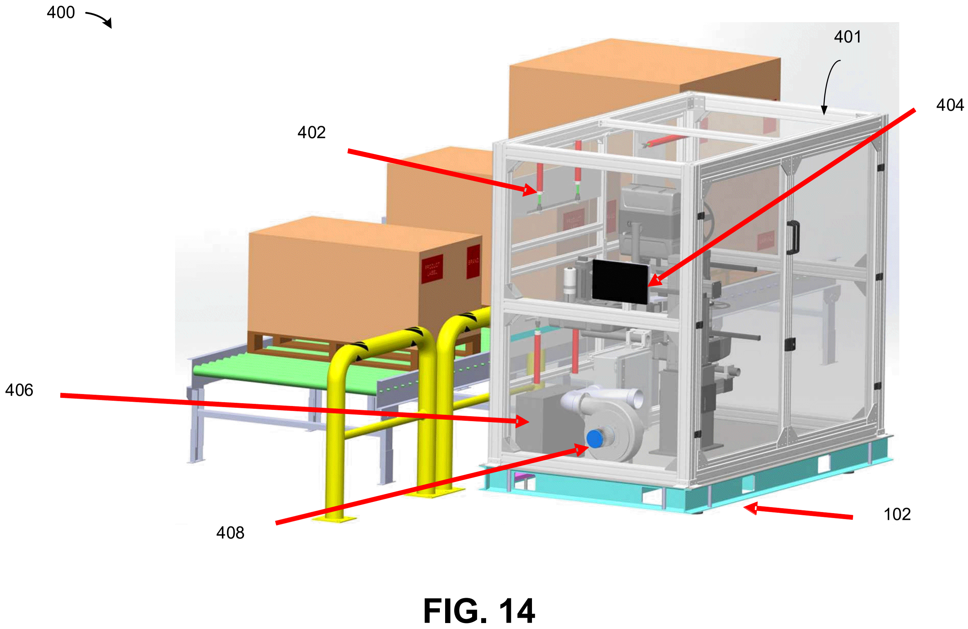

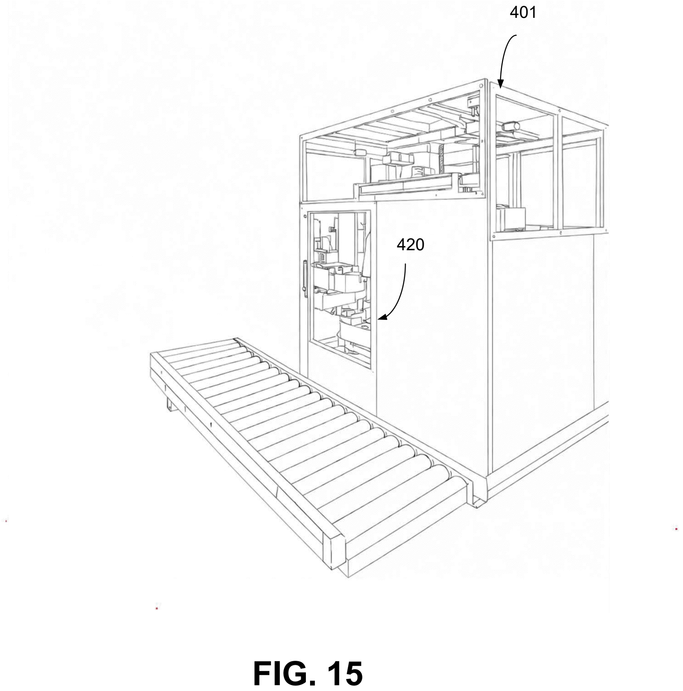

FIG. 14 and 15 show automated systems in accordance with example embodiments of the present disclosure. FIG. 14 is a front perspective view of an enclosed automated system 400 comprising an apparatus and control system 104 as described above. The system 400 is surrounded by an enclosure 401 for environmental protection of the system 400. The enclosure 401 includes a door 402, such as a dust door or other sealable door, coupled to the control system 140. The door 402 is movable between an open position and a closed position. The control system 140 is configured to move the door 402 from the closed position to the open position in response to receiving a respective control instruction from the control system 140 to allow the applicators 130 to interact with a package in the conveying system 104, and to move the door 402 from the open position to the closed position in response to receiving a respective control instruction after the applicators 130 have completed interacting with the package in the conveying system 104.

The system 400 comprises a positive pressure filtered air system 408 within the enclosure 401 and an environment control system 404 connected to the positive pressure filtered air system 408 for controlling the positive pressure filtered air system 408 to provide a positive pressure environment within the enclosure 401.

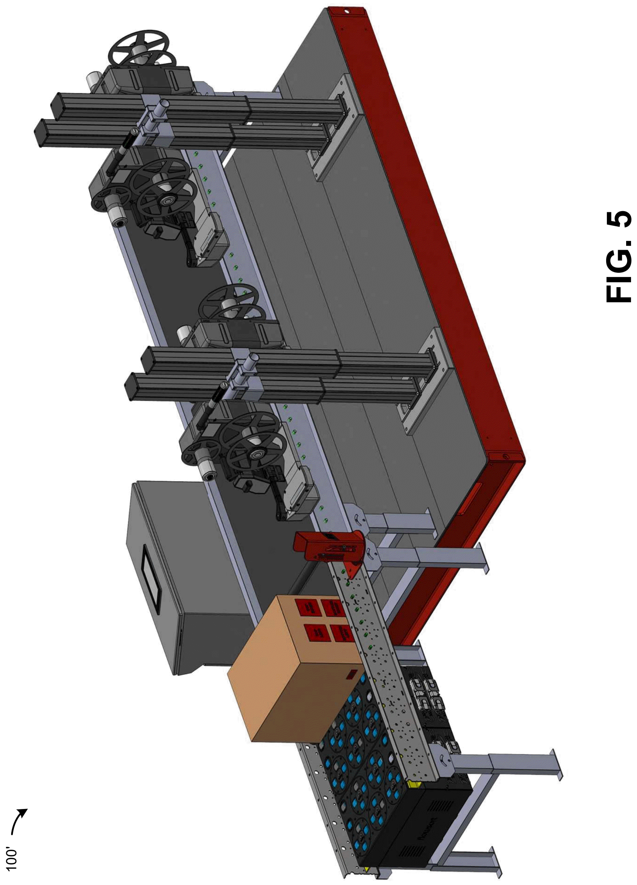

The system 400 may also comprise an uninterrupted power supply 406. FIG. 5 shows a different embodiment of the enclosed automated system 400 with the door 402 opened to expose a working opening for the applicators 130 to pass through. The door 402 opens when a package, such as a pallet, is detected to allow document and/or label application by the applicators 130 rom positive pressure enclosure.

### Z - L Pattern Methodology

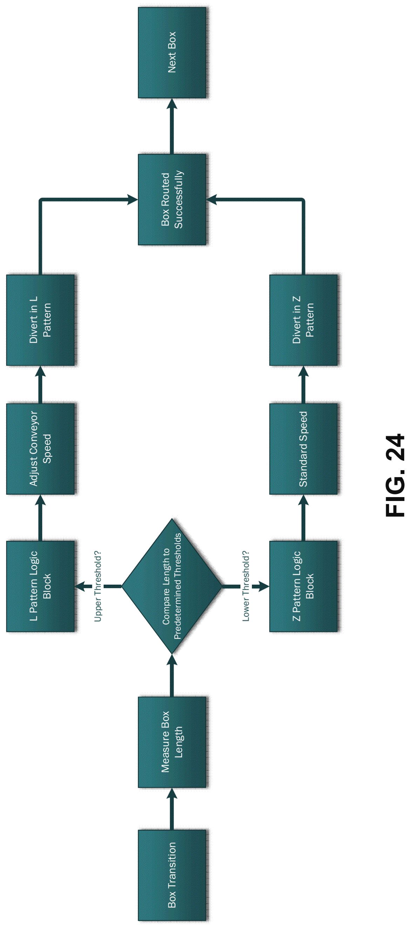

The system dynamically adjusts the handling of packages on the line based on their measured length. Package Detection and Measurement: Each package passes under a sensor that measures its length in real-time. This measurement acts as the key input for how we handle the package downstream. Decision Logic: Once the package length is captured, the system compares it against predefined thresholds. Depending on the length: If the package is within the range for a Z-pattern, the system routes it accordingly. If the package falls within the range for an L-pattern, the system adjusts speed and actuators to divert the package in that pattern. Speed Adjustment: Package length also influences conveyor speed. Longer packages may require higher speeds to ensure accurate diversion, while shorter packages can be moved at standard speed. This is to accommodate weight ranges. Diversion Actuation: Based on the selected pattern, the actuators or diverters adjust in real-time to guide the package along the correct path. This allows for accurate label application and minimize applications to wrong side of package. Continuous Loop: This process repeats for each package, ensuring that every item is measured, routed, and handled efficiently without manual intervention. The system essentially closes the loop between measurement, to logic decision, to speed/diversion control, optimizing both speed and accuracy on the line. FIG. 24 shows a Z-L pattern logical flowchart in accordance with one embodiment of the present disclosure.

### Control and Communications Infrastructure

FIG. 16 is a simplified functional block diagram of a communication system 1600 suitable for use with an automated system of the present disclosure in accordance with an example embodiment. The system 1600 comprises a plurality of computing systems 1602 each corresponding to an automated system in accordance with the present disclosure, an enterprise resource planning (ERP) system server 1606, and a communication network 1610. In other embodiments, more or fewer computing systems 1602 may be present. The computing systems 1602 communicate with the ERP system server 1606 via the communication network 1610. The communication network 1610 may be a private network or the Internet. A firewall 1612 may be present between the ERP system server 1606 and communication network 1610.

The ERP system server 1606 comprises an order database 1620. The order database 1620 comprises order data including a number of packages in each order, an identifier for each package in the order (sometimes called a license plate number (LCN)), shipping carrier information for the order, an identification of any labels that are required for each package, an identification of any documents that are required for each package, label data for any labels to be printed, document data for any documents to be printed, control information for printing and applying the labels, control information for printing and applying documents, and control information for retrieving pre-printed documents and applying the documents. The document, label and control information may comprise one or a combination of printer command language (PCL) commands, zebra programming language (ZPL) commands, and portable document format (PDF) files. The location of labels and documents to be applied may be defined in the control information or may be determined by the computing systems 1602 at runtime depending on the type of label or document and respective order data.

The order database 1620 also stores an order status for each order, a package location for each package in the order, and one or both of a label status and document status. The values for the order status, package location, and label status and/or document status are updated at different times as the packages in any order move through the pack line based on input from various control systems, such as the computing systems 1602 of the automated systems.

The communication network 1610 enables the exchange of data between the user computing devices 202, the ERP system server 1606. The ERP system server 1606 may comprise one or a plurality of networks of one or more network types coupled via appropriate methods known in the art such as a local area network (LAN), a wireless local area network (WLAN) such as Wi-Fi^{™}, a wireless personal area network (WPAN) such as Bluetooth^{™} based WPAN, a wide area network (WAN), a public-switched telephone network (PSTN), or a public-land mobile network (PLMN), also referred to as a wireless wide area network (WWAN) or a cellular network. The WLAN may include a wireless network which conforms to IEEE 802.11x standards or other communication protocol.

FIG. 17 illustrates a simplified block diagram of a computing system 1700 suitable for controlling an automated system in accordance with example embodiments of the present disclosure. Other computing systems suitable for implementing embodiments described in the present disclosure may be used, which may include components different from those discussed below. In some examples, the computing system 1700 may be implemented across more than one physical hardware unit, such as in a parallel computing, distributed computing, virtual server, or cloud computing configuration. Although FIG. 17 shows a single instance of each component, there may be multiple instances of each component in the computing system 1700.

The computing system 1700 may include one or more processor(s) 1702, such as a central processing unit (CPU) with a hardware accelerator, a graphics processing unit (GPU), a tensor processing unit (TPU), a neural processing unit (NPU), a microprocessor, an application-specific integrated circuit (ASIC), a field-programmable gate array (FPGA), a dedicated logic circuitry, a dedicated artificial intelligence processor unit, or combinations thereof.

The computing system 1700 may also include one or more optional input/output (I/O) interfaces 1704, which may enable interfacing with one or more optional input devices 1714 and/or optional output devices 1716. In the example shown, the input device(s) 1714 (e.g., a keyboard, a mouse, a microphone, a touchscreen, and/or a keypad) and output device(s) 1716 (e.g., a display, a speaker and/or a printer) are shown as optional and external to the computing system 1700. In other examples, one or more of the input device(s) 1714 and/or the output device(s) 1716 may be included as a component of the computing system 1700. In other examples, there may not be any input device(s) 1714 and output device(s) 1716, in which case the I/O interface(s) 1704 may not be needed.

The computing system 1700 includes one or more communication interfaces 1706 for wired or wireless communication with the communication network 1610 (e.g., an intranet, the Internet, a P2P network, a WAN and/or a LAN) or other node. The communication interfaces 1706 may include wired links (e.g., Ethernet cable) and/or wireless links (e.g., one or more antennas) for intra-network and/or inter-network communications.

The computing system 1700 includes one or more memory(ies) 1708 which may comprise volatile (transitory) and/or non-volatile (non-transitory) memory. The memory(ies) 1708 may include a mass storage unit such as a solid-state drive, a hard disk drive, a magnetic disk drive and/or an optical disk drive, flash memory, random access memory (RAM), and/or a read-only memory (ROM). The memory(ies) 1708 store data 1709 and software instructions 1717 for execution by the processor(s) 1702, such as to carry out examples described in the present disclosure. The memory(ies) 1708 may store a number of functional software modules or components various that interact with each other to provide the functionality described herein.

The memory(ies) 1708 may store a database 1711. The memory(ies) 1708 interact with the I/O interface 1704, which is connected to input device(s) 1714 and output device(s) 1716. The computing system 1700 mediates information processing amongst the processor(s) 1702, the memory(ies) 1708, the I/O interface 1704, and the communication interface 1706, with communication therebetween enabled by the data bus 1710.

Data and/or instructions may also be provided by an external memory (also known as an external data storage system). The external memory may be an external drive in wired or wireless communication with the computing system 1700 or may be provided by a transitory or non-transitory computer-readable medium. Examples of non-transitory computer readable media include RAM, ROM, an erasable programmable ROM (EPROM), an electrically erasable programmable ROM (EEPROM), an optical disc drive, a flash memory or other portable memory storage. The computing system 1700 may invoke data and/or instructions from the external memory to perform processing and may store data and/or instructions obtained through corresponding processing in the memory 1708 or the external memory.

The computing system 1700 comprises a data bus 1710 providing communication among components of the computing system 1700, including the processor(s) 1702, I/O interface(s) 1704, communication interface(s) 1706, and/or memory(ies) 1708. The communication bus 1710 may be any suitable bus architecture including, for example, a memory bus, a peripheral bus or a video bus.

### Positioning device for a line scanner of the automated apparatus and system

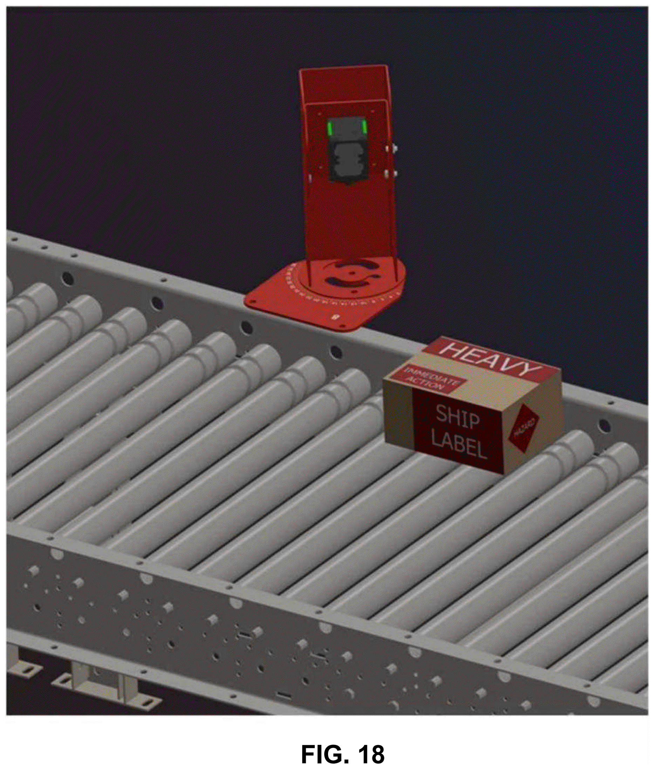

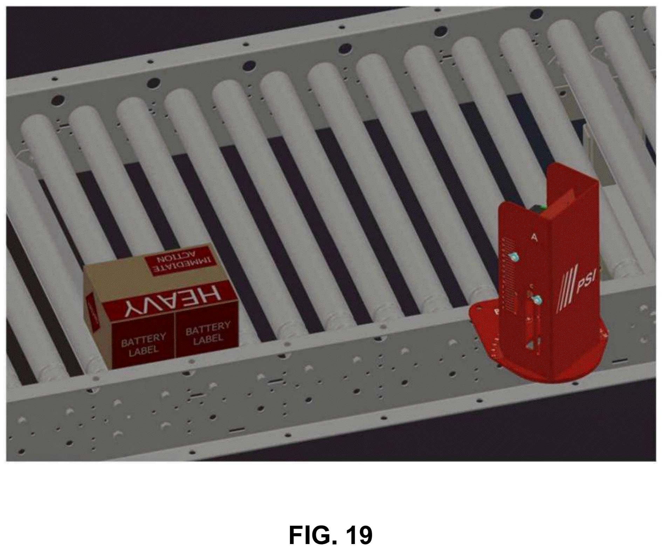

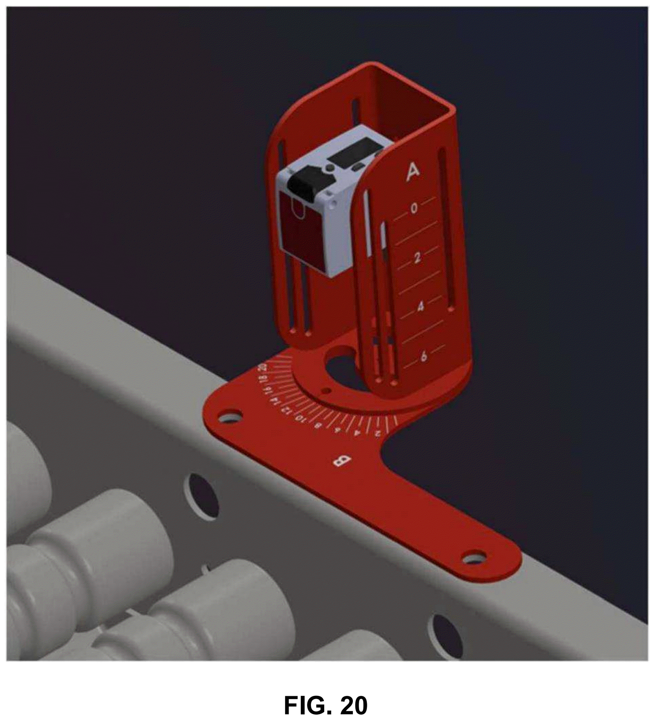

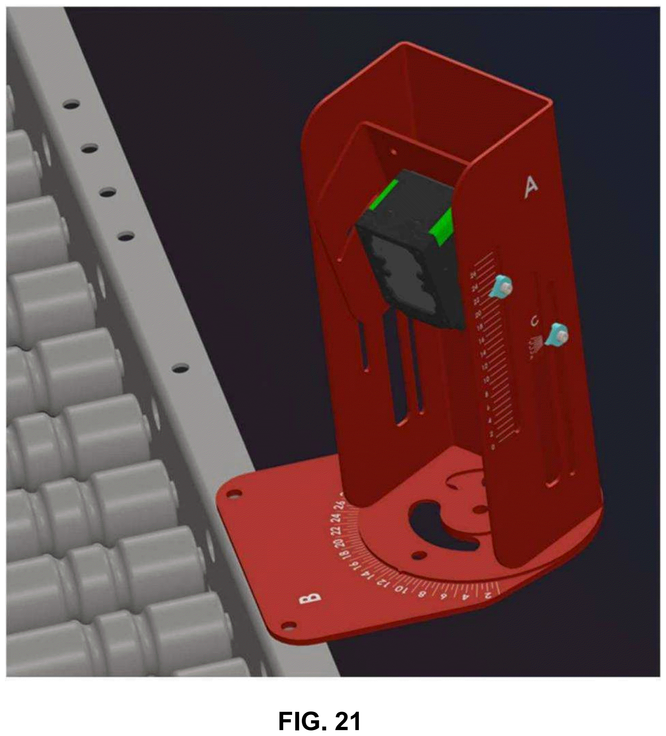

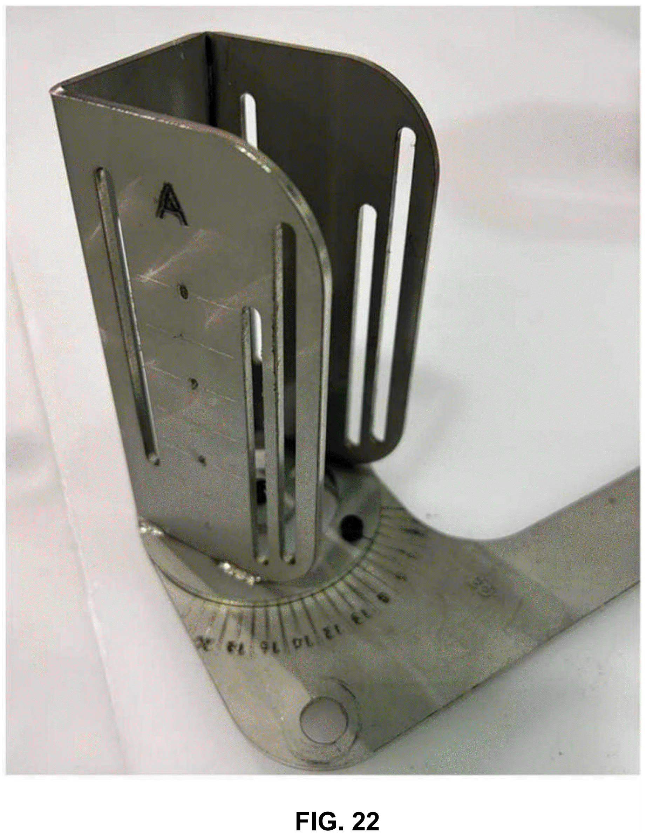

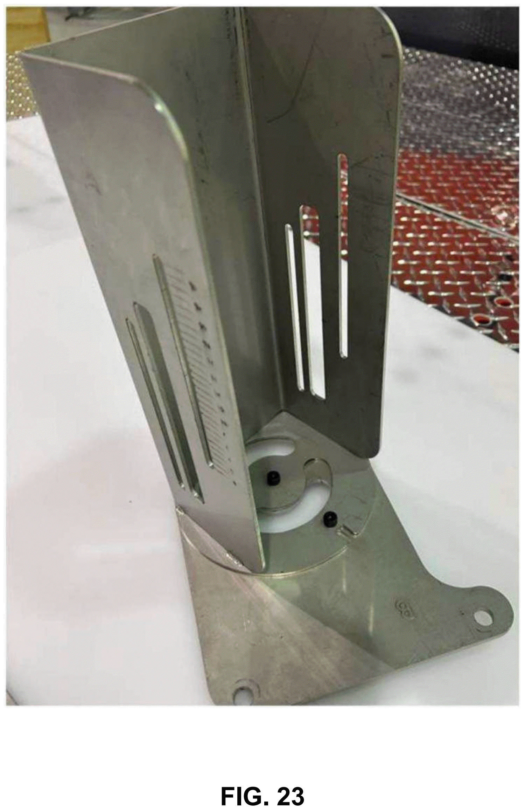

FIGs. 18 to 21 are perspective views of a positioning device 2010 and line scanner 2020 of an automated apparatus and system in accordance with the present disclosure. FIGs. 22 to 23 are perspective views of the positioning device 2010 of FIGs. 18 to 21 for use with a line scanner of an automated apparatus and system in accordance with the present disclosure. The positioning device in FIGs. 22 and 23 is substantially the same as that in FIGs. 18 to 21 with the notable difference that the line scanner 2020 has been removed to better illustrate the construction of the positioning device 2010.

The positioning device 2010 provides for repeatable alignment or calibration of line scanners mounted on the conveyor systems. An initial precision position of the line scanner 2020 that is obtained using the positioning device 2010 is recorded by recording the index values or positions of various indexers of the positioning device 2010. The positioning device 2010 has three parts: a base with a circular index ring, an angled support arm mounted to the base so as to be rotatable about the circular index ring, and a rotatable and slide-able mounting bracket mounted within the support arm. The line scanner 2020 is mounted to the mounting bracket in use. The circular index ring has a number of circular index positions at which the support arm may be positioned, each marked thereon to indicate the orientation/position of the support arm. The mounting bracket may be moved/slid up or down the support arm in accordance with a number of index positions to change its height and the height of a mounted line scanner relative to the base, each index position marked thereon to indicate the height of the mounting bracket/line scanner. Lastly, the mounting bracket may be rotate or pivot to change its angle and the angel of a mounted line scanner relative to a surface of the conveying system in accordance with a number of index positions, each index position marked thereon to indicate the angle of the mounting bracket/line scanner. During routine alignment or calibration of the line scanner, after the automated system has been moved or adapted, after an error is detected or other reasons, the line scanner may be returned to the initial precision position by resetting the indexers to the initial precision position values.

### General

Certain adaptations and modifications of the example embodiments can be made without departing from the scope of the present disclosure. Numerous specific details are set forth to provide a thorough understanding of the example embodiments. However, it will be understood by persons of ordinary skill in the art that the example embodiments described herein may be practiced without some of these specific details. Furthermore, well-known methods, procedures, and elements have not been described in detail so as not to obscure the example embodiments described herein.

In the example embodiments, it should be understood that certain elements may be implemented in specific forms different from those described in the example embodiments. Example elements may be substituted for equivalents unless indicated otherwise explicitly or by context. Element division is merely a logical function division and other divisions can be used in other embodiments provided there is no adverse change in function, unless indicated otherwise explicitly or by context. For example, a plurality of elements may be combined or integrated into one or optional elements may be omitted. Elements described and/or shown as being separate may or may not be physically separate and may or may not be located remotely or together.

Example embodiments of the present disclosure describe methods with steps in a certain order, however, one or more steps of the methods may be omitted or altered as appropriate in other embodiments. The example embodiments of the methods described herein may be modified by substituting, reordering or adding steps as appropriate. With respect to steps performed by a computing system such as a controller of the automated apparatus and system of the present disclosure, the coding of software for carrying out the steps and/or methods is within the scope of a person of ordinary skill in the art having regard to the present disclosure. Moreover, a person of ordinary skill in the art will understand that at least some steps performed by a computing system could be implemented by hardware instead of software, or a combination of hardware and software.

With respect to software functions, separate boxes or illustrated separation of functional elements of illustrated apparatus and systems does not necessarily require physical separation, as communication between such elements may occur by way of messaging, function calls, shared memory space and so on, without any physical separation. As such, functions need not be implemented in physically or logically separate platforms even if such functions are illustrated separately for ease of explanation. Different devices may have different designs, such that although some devices implement some functions in fixed function hardware, other devices may implement such functions in a programmable processor with code obtained from a machine-readable medium. Individual elements described below may be split or subdivided into multiple elements in some instances, and multiple elements may be combined in some instances.

All values and sub-ranges within disclosed ranges are also disclosed. Also, although the systems, devices and processes disclosed and shown herein may comprise a specific number of elements/components, the systems, devices and assemblies can be modified to include additional or fewer of such elements/components. For example, although any of the elements/components disclosed may be referenced as being singular, the embodiments disclosed herein can be modified to include a plurality of such elements/components.

Features from one or more of the example embodiments may be selected to create alternate embodiments comprised of a subcombination of features which may not be explicitly described above without departing from the scope of the present disclosure. In addition, features from one or more of the example embodiments may be selected and combined to create alternate embodiments comprised of a combination of features which may not be explicitly described above without departing from the scope of the present disclosure. Features suitable for such combinations and subcombinations would be readily apparent to persons skilled in the art upon review of the specification as a whole.

Although example embodiments are described above, the teachings of the present disclosure may be embodied in other specific forms without departing from the scope of the present disclosure. The example embodiments are intended to be only illustrative and not restrictive. Modifications, substitutions, additions, and other implementations of the example embodiments are possible. The scope of the present disclosure is, therefore, described by the appended claims rather than by the foregoing description. The scope of the claims should not be limited by the example embodiments set forth above but should be given the broadest interpretation consistent with the description as a whole. The present disclosure intends to cover and embrace all suitable changes in technology.

## Claims

1. An automated system, comprising:
an apparatus comprising:
a base comprising a base frame;
a conveyor system mounted to the base at a height above the base, the conveyor system having a conveying direction extending from a first end of the conveyor system to a second end of the conveyor system, the conveyor system comprising a transfer table at the first end thereof for receiving packages and one or more conveyors downstream of the transfer table in the conveying direction;
a first scanner mounted to the conveyor system or base with a view of the transfer table; and
a plurality of applicators mounted to the base, each applicator being (i) a print and apply label applicator configured to print a label and apply the label to a package on the conveyor system in response to receiving a respective control instruction, (ii) a document applicator configured to apply an adhesive portion of an adhesive-backed document enclosure containing one or more printed documents to a package on the conveyor system in response to receiving a respective control instruction, or (iii) a document inserter configured to insert one or more printed documents into an open package on the conveyor system in response to receiving a respective control instruction; and
a control system contained in a housing mounted to the base, the control system comprising one or more processors, a memory and a communication interface for communication with an enterprise resource planning (ERP) system server over a communications network, the control system being connected to the conveyor system, the sensors, and the applicators, wherein the control system is configured to:
receive from the first scanner a package identifier (ID) associated with a package on the conveyor system;
determine from the ERP system server document and/or label specifications for the package in accordance with the package ID; and
send control instructions to respective applicators in accordance with the determined document and/or label specifications.

2. The automated system of claim 1, further comprising:
one or more further scanners mounted to the conveyor system or base with a view of the conveyor system after the applicators, wherein a number and location of further scanners is dependent on a number and location of the label applicators.

3. The automated system of claim 1 or 2, wherein the applicators are spaced apart in the conveying direction.

4. The automated system of any one of claims 1 to 3, wherein a subset of the applicators are located on a first side of the conveying system and another subset of the applicators are located on a second side of the conveying system opposite to the first side.

5. The automated system of any one of claims 1 to 4, further comprising:
a printer coupled to the control system and configured to print one or more documents in response to receiving one or more respective control instructions from the control system, the one or more respective control instructions being sent by the control system to the printer in response to the determined document specifications; and
a document retriever for retrieving one or more documents from the printer and transferring the one or more retrieved documents to the document inserter or a document inserter in response to receiving a respective control instruction from the control system, the document inserter being configured to fold the one or more retrieved documents received from the document retriever to produce one or more folded documents and insert the one or more folded documents into an adhesive-backed document enclosure, the document applicator being to configured to apply the adhesive portion of the adhesive-backed document enclosure to a package on the conveyor system in response to receiving a respective control instruction.

6. The automated system of claim 5, wherein the document enclosure is an envelope, pouch or bag.

7. The automated system of any one of claims 1 to 4, further comprising:
one or more document trays, each tray for storing pre-printed documents of a particular type;
a document retriever for retrieving one or more documents from the one or more document trays in accordance with the determined document specifications and transferring the one or more retrieved documents to the document inserter or a document inserter in response to receiving a respective control instruction from the control system, the document inserter being configured to fold the one or more retrieved documents received from the document retriever to produce one or more folded documents and insert the one or more folded documents into an adhesive-backed document enclosure, the document applicator being to configured to apply the adhesive portion of the adhesive-backed document enclosure to a package on the conveyor system in response to receiving a respective control instruction.

8. The automated system of claim 7, wherein the document enclosure is an envelope, pouch or bag.

9. The automated system of any one of claims 1 to 8, further comprising:
lockable wheels mounted to the base.

10. The automated system of any one of claims 1 to 9, further comprising:
leveling pads mounted to the base.

11. The automated system of any one of claims 1 to 10, further comprising:
an enclosure for environmental protection surrounding the apparatus and the control system, the enclosure including a door coupled to the control system, the door movable between an open position and a closed position, the control system being configured to move the door from the closed position to the open position in response to receiving a respective control instruction from the control system to allow the applicators to interact with a package in the conveying system, and to move the door from the open position to the closed position in response to receiving a respective control instruction after the applicators have completed interacting with the package in the conveying system.

12. The automated system of claim 11, further comprising:
a positive pressure filtered air system within the enclosure and an environment control system connected to the positive pressure filtered air system for controlling the positive pressure filtered air system to provide a positive pressure environment within the enclosure.

13. The automated system of any one of claims 2 to 14, wherein the first scanner scan packages to read the package ID, and wherein the one or more further scanners scan packages after a last conveyor in the conveying system to read data from applied labels and/or applied documents.

14. The automated system of claim 13, further comprising:
a further transfer table at the second end of the conveying system downstream of the conveyors for diverting rejected packages in response to a determination that data from applied labels and/or applied documents does match the determined document and/or label specifications for the package ID.

15. The automated system of claim 14, wherein rejected packages are diverted to a station for retrieval and/or repair.
